# FASCICULE DE BREVET EUROPEEN

(11) **EP 3 055 103 B1**
(45) Date de publication et mention de la délivrance du brevet: **15.11.2017**
(21) Numéro de dépôt: 14786618.0
(22) Date de dépôt: 19.09.2014
(51) Int. Cl.: B24C 3/06, B24C 9/00

(54) **PROCÉDÉ DE RÉCUPÉRATION DE DÉCHETS D'USINAGE PAR APPORT D'ENERGIE ET MACHINE D'USINAGE COMPORTANT UN SYSTÈME DE RÉCUPÉRATION DE DÉCHETS**
VERFAHREN ZUR WIEDERGEWINNUNG VON BEARBEITUNGSRÜCKSTÄNDEN DURCH EINGABE VON ENERGIE UND BEARBEITUNGSMASCHINE MIT EINEM RÜCKSTANDSWIEDERGEWINNUNGSSYSTEM
METHOD FOR RECOVERING MACHINING WASTE BY INPUT OF ENERGY AND MACHINING MACHINE COMPRISING A WASTE RECOVERY SYSTEM

(30) Priorité: 20.09.2013 FR 1359089
(43) Date de publication de la demande: 17.08.2016
(73) Titulaire: BAYAB INDUSTRIES, 31850 Montrabe (FR)
(72) Inventeur: DELERIS, Michel, F-31320 Rebigue (FR); CENAC, François, F-31570 Sainte Foy d'Aigrefeuille (FR); BENEZECH, Pascal, F-31300 Toulouse (FR)
(74) Mandataire: Junca, Eric
(86) Numéro de dépôt international: PCT/EP2014/070036
(87) Numéro de publication internationale: WO 2015/040181

(56) Documents cités:
- WO-A1-93/14905
- US-A- 4 375 740
- US-A- 5 138 800

## Description

### DOMAINE TECHNIQUE

L'invention se rapporte à un procédé de récupération de déchets générés au cours d'un usinage par apport d'énergie, ainsi qu'à une machine d'usinage par apport d'énergie équipée d'un système de récupération de déchets apte à mettre en oeuvre ledit procédé.

L'usinage de surface peut être obtenu par grenaillage, par un outil coupant, une action chimique ou tout procédé d'émission de particules solides (sable, sel, etc.) et/ou fluides (en particulier l'eau). Plus particulièrement, l'usinage de grandes surfaces de panneau peut être réalisé par deux types de système: un outillage de forme, utilisé en suivant la surface traitée, ou un système par apport d'énergie, utilisé sans nécessité de suivre la surface traitée. Ce dernier type est avantageusement mis en oeuvre par des machines d'apport d'énergie impactante, comme le jet de matière abrasive sous une pression d'eau élevée, pouvant atteindre plusieurs milliers de bars. De telles machines dites à jet d'eau abrasif peuvent réaliser des découpages, rectifications, réparations ou encore des nettoyages (décapage, polissage, ébarbage, etc.) desdites surfaces de panneau.

L'usinage au jet d'eau abrasif repose sur le principe d'enlèvement de matière par action mécanique du jet d'eau chargé de particules abrasives et propulsé à travers une buse équipant une tête d'éjection. Un avantage des machines d'usinage par apport d'énergie réside dans l'influence négligeable de la distance ou de l'inclinaison entre la buse d'éjection et la surface à traiter. Il est ainsi possible d'usiner des surfaces gauches par déplacement relatif selon deux axes entre la machine et la surface à traiter, alors que la distance entre la tête d'éjection et la surface traitée varie en fonction de la géométrie précise du panneau qui n'est, de fait, connue qu'à une tolérance près.

Les panneaux traités peuvent présenter des courbures, en particulier les panneaux en matériau composite utilisés dans l'industrie aéronautique, et former ainsi des surfaces gauches.

Pour réaliser l'usinage sur de telles surfaces, des machines portables par jet d'eau abrasive ont été plus particulièrement mises au point. Par une commande numérique deux axes de la tête d'éjection mobile sur un portique apte à se déplacer sur des glissières, ces machines permettent au jet de parcourir successivement - et avec toute la précision requise - des surfaces de dimension déterminée. Ce type de machine permet donc de réaliser un usinage adapté à la surface courbe des panneaux. L'érosion de matière génère localement, au niveau de l'impact du jet sur la surface traitée, de l'eau chargée de particules abrasives, de particules extraites de ladite surface et de poussière formant des déchets. Se pose alors la question de l'évacuation efficace de ces déchets dans toutes les configurations car une machine par apport d'énergie est capable de travailler sur toute surface, qu'elle soit verticale ou supérieure (type « au plafond »).

### ÉTAT DE LA TECHNIQUE

Pour permettre l'évacuation des déchets, de nombreux brevets proposent d'équiper la tête d'éjection d'un capot en liaison avec une pompe d'aspiration. Par exemple le document de brevet EP 1 894 670 décrit un porte-outil équipé notamment d'un système d'aspiration de déchets, produits durant un usinage de type automatique à contrôle numérique, et d'un capot d'aspiration conique. Ce capot peut être constitué d'une brosse composée de rangées de fibres flexibles ou d'une pièce rigide ou semi-rigide, pouvant être munie de trous de perçage pour l'arrivée d'air.

Dans le document de brevet EP 1 854 383, un dispositif d'aspiration d'un appareil d'abrasion comprend, entre autres, un moyen de connexion incliné relié à une source de vide et une section d'extrémité élastique cylindrique de type « soufflet ».

Cependant le capot ou le soufflet décrits dans ces documents ne permettent pas de maintenir un contact permanent avec la surface à traiter, en particulier lorsque cette surface est gauche, lorsqu'un déplacement deux axes est opéré : « l'étanchéité » à cette surface n'est pas assurée et l'air venant de l'extérieur peut passer entre ces moyens de raccordement de l'état de la technique et ladite surface.

Outre l'étanchéité, ces moyens de raccordement ne permettent pas de garantir le confinement des déchets qui peuvent sortir hors des limites lors du déplacement de la tête d'éjection mobile : les moyens de l'état de la technique ne définissent pas de porosité apte à empêcher les déchets de sortir tout en laissant entre l'air d'aspiration. Le confinement n'est pas respecté.

De plus, lesdits moyens de l'état de la technique ne réalisent pas un balayage sûr des surfaces usinées car, lors du déplacement de la tête d'éjection, des déchets non aspirés ne restent pas toujours confinés dans la surface d'usinage du fait du manque d'étanchéité et de porosité.

Le document US-A- 5 138 800 forme la base du préambule des revendications 1 et 7.

### EXPOSÉ DE L'INVENTION

L'invention vise à pallier les insuffisances de l'état de la technique, en d'autres termes vise à réaliser en combinaison les fonctions d'étanchéité, de porosité et de balayage.

Pour ce faire, la présente invention propose de confiner les déchets et d'aspirer ces déchets au niveau de la tête d'éjection grâce un raccordement adaptable et suffisamment souple, de sorte à rester en contact avec la zone d'usinage, tout en permettant à l'air de passer à travers ce raccordement.

Plus précisément, la présente invention a pour objet un procédé de récupération de déchets générés en cours d'usinage d'une surface par jet de matière sous pression provenant d'une buse d'axe sensiblement perpendiculaire à la surface à usiner. La buse équipe une tête d'éjection de machine d'usinage entraînée selon deux axes pour traiter la surface de forme pouvant être gauche. Au moins une enceinte prolonge la tête d'éjection jusqu'à la surface à usiner et délimite un espace interne. Une aspiration d'air est réalisée dans l'espace interne afin d'évacuer les déchets générés.

Il est en effet possible d'agencer plusieurs enceintes concentriques plaquées sur la surface à traiter. Par exemple, la première enceinte dégrossit la récupération des déchets, et la deuxième finit le travail et sèche la surface.

Dans ce procédé, une mobilité de l'enceinte ou d'un ensemble d'enceintes concentriques est réalisée selon l'axe de la buse en combinaison avec une articulation de ce type d'enceinte est réalisée selon l'axe de la buse en combinaison avec une articulation en rotation et/ou translation pour s'adapter à la courbure de la surface usinée avec une élasticité suffisante pour rattraper les déplacements relatifs de la tête d'éjection par rapport à la surface usinée et maintenir un contact étanche sensiblement permanent pour réaliser un confinement des déchets dans l'espace interne et un balayage des déchets lors de son déplacement sans que les déchets ne puissent sortir de l'espace interne.

Dans les conditions d'usinage de surfaces gauches, le procédé selon l'invention s'adapte directement à la variation de distance (hauteur de coupe) entre la tête d'éjection et la surface usinée et optimise l'aspiration des déchets par cette adaptation. Ceci permet de conserver les fonctions d'étanchéité, de porosité et de balayage quelle que soit cette hauteur de coupe variable, étant entendu que la qualité d'usinage - c'est-à-dire la profondeur usinée - n'est affectée ni par la variation de la hauteur de coupe ni par l'inclinaison du jet.

Ainsi, la mobilité de l'enceinte selon l'axe de la buse - en fonction de la configuration de la surface usinée - permet de s'affranchir du déplacement de la machine selon l'axe « Z », si bien que le déplacement de la machine peut se limiter à un déplacement deux axes « X-Y ». Le procédé selon l'invention est donc compatible avec une commande et un système simplifiés de déplacement de la machine. De plus, ce procédé s'adapte également automatiquement à la courbure de la surface usinée sans nécessiter de prévoir de moyens d'inclinaison.

Selon des modes de mise en oeuvre avantageux :
- l'aspiration d'air est réalisée de l'extérieur vers l'intérieur dudit espace interne à travers au moins une paroi poreuse de confinement présentant une élasticité suffisante pour former l'articulation d'adaptation à la courbure de la surface usinée;
- alternativement ou conjointement, l'aspiration d'air est réalisée par une arrivée d'air sous pression dans ledit espace interne afin de guider l'air porteur des déchets vers une sortie d'évacuation située en regard de l'arrivée ; cette solution permet de fluidifier l'air, de faciliter l'aspiration et donc de diminuer les perturbations des turbulences de l'air et des déchets sur le jet ;
- une membrane électromagnétique est formée dans l'espace intérieure de sorte que l'air chargée de déchets ne perturbe pas le jet de matière abrasive.

De manière préférée, la ou une paroi poreuse de confinement est agencée à l'extrémité de l'enceinte de sorte à venir directement en contact élastique avec la surface usinée.

Selon un mode de mise en oeuvre particulier, l'enceinte se compose d'une partie tubulaire, qui présente globalement une forme de révolution cylindrique et/ou conique d'axe de symétrie centrale coïncidant sensiblement avec l'axe de la buse, et d'un collecteur de déchets en liaison avec la partie tubulaire via ladite articulation. Avantageusement, l'articulation est formée d'au moins une translation et/ou une rotation en fonction du degré de complexité de forme de la surface à usiner.

L'invention se rapporte également à une machine d'usinage par apport d'énergie comportant un système de récupération de déchets apte à mettre en oeuvre le procédé ci-dessus. La machine comporte une tête d'éjection équipée d'une buse d'axe sensiblement perpendiculaire à la surface à usiner, et entraînée par un système de guidage deux axes. La tête d'éjection se prolonge par au moins une enceinte jusqu'à la surface à usiner, l'enceinte étant couplée à des moyens de pompage d'air pour récupérer les déchets issus de l'usinage.

Dans ce système, l'enceinte comporte une partie tubulaire équipée de moyens de variation en longueur afin d'adapter l'enceinte à la distance entre la tête d'éjection et la surface à usiner. L'enceinte comporte également un moyen d'articulation en rotation et/ou en translation afin d'adapter l'enceinte aux inclinaisons angulaires variables de la surface à usiner.

De plus, l'enceinte présente des moyens d'aspiration d'air pour évacuer les déchets par les moyens de pompage d'air.

Selon des modes de réalisation préférés :
- les moyens d'aspiration d'air sont constitués par au moins une paroi annulaire en matériau poreux dans un plan sensiblement perpendiculaire à l'axe de la buse. Cette paroi annulaire présente une élasticité suffisante pour servir d'articulation principale ou complémentaire en maintenant l'enceinte en contact avec la surface à usiner de sorte à réaliser un contact étanche permanent de l'enceinte sur cette surface ;
- alternativement ou conjointement, les moyens d'aspiration d'air sont constitués par des moyens d'injection d'air provenant d'un compresseur de sorte que l'air est dirigé vers des moyens de sortie d'air communiquant avec le tuyau d'aspiration des déchets;
- l'enceinte comporte un collecteur de déchets monté en liaison avec la partie tubulaire par le moyen d'articulation à double pivotement ;
- les moyens d'injection comportent une fente d'injection d'air comprimé par un compresseur annexe, agencée dans le collecteur de sorte que l'air est dirigé vers les moyens de sortie d'air comportant une fente de sortie d'air située en regard de la fente d'injection, la fente de sortie communiquant avec le tuyau d'aspiration des déchets ;
- le moyen d'articulation peut être choisi, selon la complexité de la surface à usiner, entre un pivot, une rotule à billes ou à double pivotement, en particulier une rotule à deux bagues concentriques présentant des axes de rotation perpendiculaires définis dans un plan sensiblement perpendiculaire à l'axe de la buse, et une rotule couplée à une glissière supplémentaire pouvant se déplacer perpendiculairement à l'axe de la buse; cette dernière combinaison est en particulier destinée à des formes très complexes telles que des renforts oméga;
- les moyens de variation en longueur sont constitués de deux parois qui coulissent co-axialement selon l'axe de la buse ;
- les parois coulissantes sont liées l'une à l'autre via des roulements à billes ou à aiguilles ;
- les moyens de pompage d'air comportent un tuyau d'aspiration couplé à une pompe;
- la ou une paroi annulaire est agencée en extrémité de l'enceinte, si bien que cette paroi se trouve soit directement en contact avec la surface à usiner soit en contact avec cette surface par l'intermédiaire d'une lèvre souple ;
- le moyen d'articulation à double pivotement est constitué de deux bagues concentriques présentant des axes de rotation perpendiculaires définis dans un plan sensiblement perpendiculaire à l'axe de la buse ;
- le matériau poreux est un matériau alvéolaire ouvert, en particulier une mousse de carbone.

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1, une vue schématique globale en perspective d'un exemple de machine portative selon l'invention avec son système de guidage deux axes à commande numérique ;
- les figures 2a et 2b, des vues en coupe verticale de la machine portative de la figure 1 avec deux profils de courbures respectivement concave et convexe de la surface à usiner ;
- la figure 3, une vue supérieure de l'articulation schématique de type à pivots entre la partie tubulaire et le collecteur de l'enceinte de la machine portative dans un plan sensiblement perpendiculaire à l'axe de la buse de la machine, et
- la figure 4, une vue en coupe du collecteur d'une variante de réalisation comportant un système à fentes d'injection et de sortie d'air situées en regard.

### DESCRIPTION DÉTAILLÉE

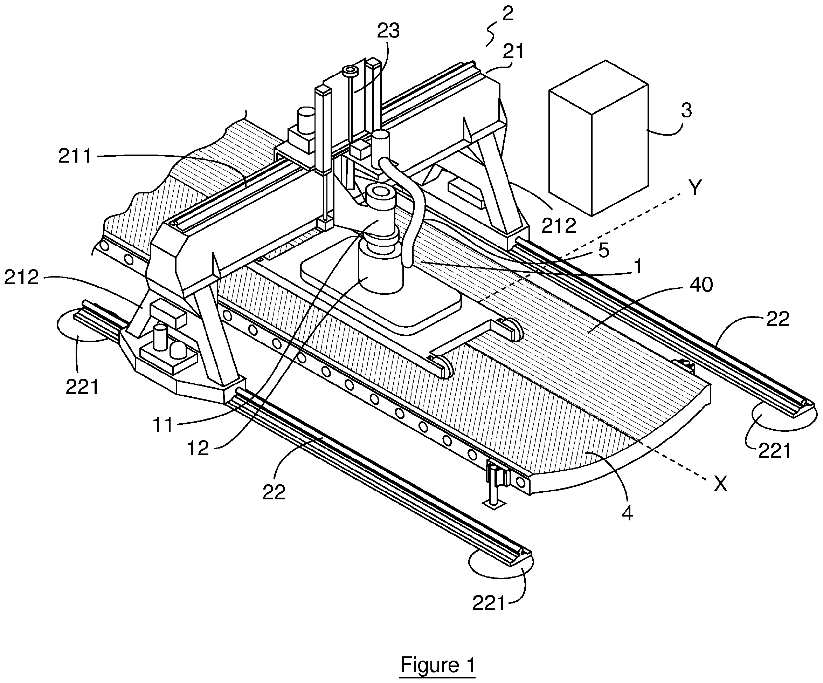

En référence à la vue schématique globale de la figure 1, un exemple de machine portative d'usinage 1 par jet de sous pression selon l'invention est entraînée par un système de guidage 2 deux axes X, Y à commande numérique 3, pour usiner une surface courbe 4, une portion de fuselage d'avion en matériau composite dans l'exemple illustré.

Le système de guidage 2 comporte un portique 21 composé d'une poutre transversale 211 supportée en extrémité par des pieds 212 qui se déplacent en translation - perpendiculairement à la poutre 211 - sur des glissières 22 via des galets (non représentés), les glissières 22 étant maintenues par des ventouses 221 appliquées à la surface 4. La machine 1 est fixée par sa tête d'éjection 11 à un châssis 23 apte à se déplacer sur la poutre 211 via des paliers (non représentés).

La tête d'éjection 11 est prolongée par une enceinte 12 qui s'étend jusqu'à la surface usinée 4. Cette enceinte 12 est couplée à un tuyau d'aspiration 5 relié à une pompe à air (non représenté) pour constituer un système de récupération des déchets issus de l'usinage.

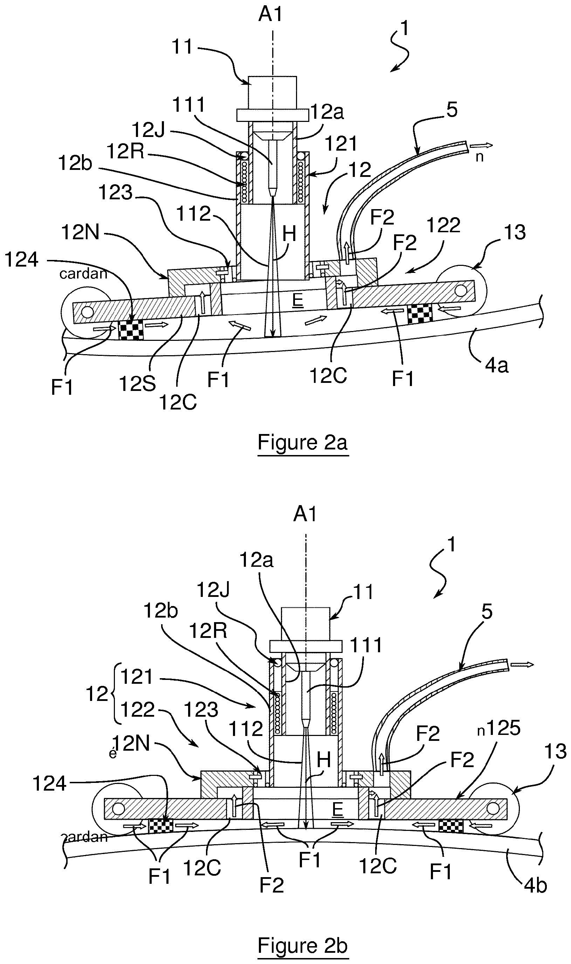

Plus précisément, des vues en coupe verticale - c'est-à-dire sensiblement perpendiculaire à la surface usinée 4 - de la machine portative 1 sont illustrées respectivement sur les figures 2a et 2b, lorsque la surface usinée 4 présente un profil de courbure concave 4a et de courbure convexe 4b.

La machine portative à usiner 1 comporte la tête d'éjection 11 de matière abrasive sous pression, par exemple du sable sous pression d'eau, et l'enceinte 12 montée sur des roulettes 13. La tête 11 est équipée d'une buse 111 d'éjection d'un jet d'eau abrasive sous pression 112, d'axe A1 sensiblement perpendiculaire à la surface 4a ou 4b usinée.

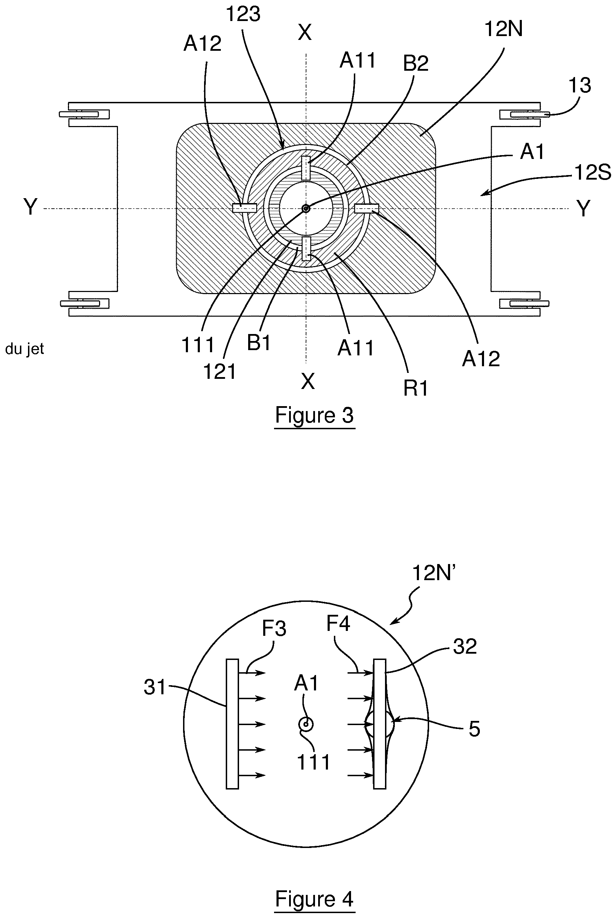

Plus particulièrement, l'enceinte 12 comporte une partie tubulaire 121 et un collecteur 122. La partie tubulaire 121 est constituée de deux parois 12a et 12b qui coulissent co-axialement l'une sur l'autre selon l'axe A1 de la buse 111 via des roulements à bille 12R, la liaison étant protégée par un joint 12J. La paroi interne 12a est solidaire de la tête d'éjection 11 et l'autre paroi externe 12b est couplée au collecteur 122 par une rotule d'articulation à double pivotement 123. Cette rotule 123 permet d'adapter l'enceinte 12, qui reste sensiblement parallèle à elle-même lors du balayage de la surface usinée, alors que la tête et la buse d'éjection restent sensiblement parallèles à elles-mêmes. Une rotule de type à double pivotement sera décrite de manière détaillée en référence à la figure 3.

Par la mobilité de la paroi externe 12b selon l'axe A1 - perpendiculairement à la surface 4a ou 4b à traiter - il est alors possible d'adapter la position de la tête d'éjection 11, en d'autres termes la hauteur de coupe « H » du jet 112, à la surface usinée. Ainsi, par comparaison entre les figures 2a et 2b, il apparaît que cette hauteur de coupe « H » est sensiblement augmentée lorsque la surface passe d'une courbure convexe 4b (figure 2b) à une courbure concave 4a (figure 2a).

De plus, l'enceinte 12 présente, dans un plan sensiblement perpendiculaire à l'axe A1 de la buse 111, une paroi sous forme de bande annulaire poreuse de confinement 124, ici en mousse de carbone, solidaire de la semelle 12S du collecteur 122. Cette bande annulaire 124 est ainsi disposée entre le collecteur 122 et la surface 4a, 4b. Cette bande 124 présente une élasticité suffisante pour rester en contact étanche avec la surface usinée 4a ou 4b, de sorte qu'un contact étanche permanent reste établi entre l'enceinte 12 et cette surface 4a, 4b.

Une aspiration d'air est alors réalisée d'abord approximativement parallèlement à la surface 4a, 4b (flèches F1) par pompage pour évacuer les déchets générés dans l'espace interne « E » délimité par ce collecteur 122 et la bande annulaire 124, au fur et à mesure de l'usinage. Le contact étanche permanent entre la bande annulaire 124 et la surface 4a, 4b réalise un balayage de ces déchets lors du déplacement dans la surface usinée. L'aspiration d'air (flèches F1 et F2) est réalisée par dépression de l'extérieur vers l'espace interne « E » à travers la bande poreuse 124, sans que les déchets ne puissent sortir de cet espace.

Puis l'air et les déchets transportés sont évacués sensiblement perpendiculairement à la surface usinée 4a, 4b (flèches F2) par le tuyau d'aspiration 5 monté sur la pompe d'évacuation (non représentée), via une nourrice 12N intégrant un canal circulaire 12C interne. La nourrice 12N est solidarisée à la semelle 12S pour constituer le collecteur 122.

Alternativement, la bande annulaire 124 peut être équipée d'une lèvre en matériau souple afin d'améliorer le balayage. Plus généralement, la bande annulaire peut être intégrée dans l'enceinte 12 et la lèvre en matériau souple est alors avantageusement prévue pour effectuer un balayage efficace.

La vue supérieure de la figure 3 illustre la rotule 123 à double pivotement formant une articulation entre la partie tubulaire 121 et la nourrice 12N. La rotule 123 est formée de deux bagues concentriques B1 et B2 séparées par une rondelle de cardan 12R. Les bagues B1 et B2 peuvent pivoter respectivement autour des axes X et Y par montage sur des pivots A11 et A12, les axes X, Y et les arbres A11, A12 étant perpendiculaires entre eux et à l'axe A1 de la buse d'éjection 111. La bague B1 est solidaire de la partie tubulaire 121 et la bague B2 de la nourrice 12N.

Dans ces conditions, la paroi externe 12b, et donc la partie tubulaire 121 ainsi que la tête d'éjection 11, peuvent former - par pivotement combiné autour des axes X et Y - un angle d'inclinaison adapté à la courbure de la surface usinée 4 et au collecteur 122, tout en restant parallèle à l'axe A1.

La vue en coupe de la figure 4 illustre une nourrice 12N' d'une variante de réalisation d'un exemple de machine portative selon l'invention. Cette nourrice 12N' comporte, en plus de la nourrice 12N' décrite ci-dessus, une fente 31 d'injection d'air comprimé (flèches F3) et une fente 32 de sortie d'air (flèches F4). L'air injecté dans la fente 31 est comprimé par un compresseur annexe (non représenté).

Plus précisément, la fente 31 est agencée dans le collecteur 122' de sorte que l'air est dirigé (flèches F3) vers la fente 32 de sortie d'air située en regard de la fente d'injection 31, la fente de sortie 32 communiquant avec le tuyau d'aspiration des déchets 5. Avantageusement, la fente de sortie 32 présente - parallèlement à l'axe A1 de la buse 111 une forme d'entonnoir qui vient se connecter au tuyau d'aspiration 5 sans créer de turbulence.

L'invention n'est pas limitée aux exemples de réalisation décrits et représentés. Par exemple, la bande annulaire de matériau poreux 124 peut être agencée dans l'enceinte 12 de l'exemple illustré aux figures 2a et 2b, en particulier entre la semelle 12S et la nourrice 12N.

Par ailleurs, il est possible d'intégrer une membrane électromagnétique virtuelle dans l'enceinte de la machine, en particulier dans la partie tubulaire, afin de fluidifier l'air et les déchets pour diminuer également les risques de perturbation du jet d'eau. Une telle membrane est générée par un champ magnétique approprié. Alternativement, une membrane réelle pourrait également être implantée avec une découpe et une porosité adaptée.

L'invention s'applique à toute machine d'apport d'énergie, en particulier, mais pas exclusivement, aux machines portables à jet d'eau abrasive. De plus, les exemples de réalisation s'étendent directement aux machines à plusieurs enceintes concentriques.

## Revendications

1. Procédé de récupération de déchets générés en cours d'usinage d'une surface (4 ; 4a, 4b) par jet de matière sous pression provenant d'une buse (111) d'axe (A1) sensiblement perpendiculaire à la surface à usiner (4), la buse (111) équipant une tête d'éjection (11) de machine d'usinage (1) entraînée selon deux axes (X, Y) pour traiter la surface (4 ; 4a, 4b) de forme pouvant être gauche, et la machine (1) comportant au moins une enceinte (12) prolongeant la tête d'éjection (11) jusqu'à la surface à usiner (4; 4a, 4b) et délimitant un espace interne (E) dans lequel une aspiration d'air est réalisée par pompage afin d'évacuer les déchets générés, ce procédé est **caractérisé en ce qu'**une mobilité de l'enceinte (12) ou d'un ensemble d'enceintes concentriques de ce type d'enceinte (12) est réalisée selon l'axe (A1) de la buse (111) en combinaison avec une articulation en rotation et/ou translation (123) pour s'adapter à la courbure de la surface usinée (4 ; 4a, 4b) avec une élasticité suffisante pour rattraper les déplacements relatifs de la tête d'éjection (11) par rapport à la surface usinée (4 ; 4a, 4b) et maintenir un contact étanche sensiblement permanent avec ladite surface usinée (4 ; 4a, 4b) pour réaliser un confinement des déchets dans l'espace interne (E) et un balayage des déchets lors de son déplacement sans que les déchets ne puissent sortir de cet espace.

2. Procédé de récupération selon la revendication 1, dans lequel l'aspiration d'air est réalisée de l'extérieur vers l'intérieur (F1, F2) dudit espace interne (E) à travers au moins une paroi poreuse de confinement (124) présentant une élasticité suffisante pour former l'articulation d'adaptation à la courbure de la surface usinée.

3. Procédé de récupération selon l'une quelconque des revendications 1 ou 2, dans lequel une arrivée d'air sous pression (31) est prévue dans ledit espace interne (E) afin de guider l'air porteur des déchets vers une sortie d'évacuation (32) située en regard de l'arrivée (31).

4. Procédé de récupération selon l'une quelconque des revendications précédentes, dans lequel une membrane électromagnétique est formée dans l'espace intérieure (E) de sorte que l'air chargée de déchets ne perturbe pas le jet de matière abrasive (112).

5. Procédé de récupération selon l'une quelconque des revendications précédentes, dans lequel la ou une paroi poreuse de confinement (124) est agencée à l'extrémité de l'enceinte (12) de sorte à venir directement en contact élastique avec la surface usinée (4 ; 4a, 4b).

6. Procédé de récupération selon l'une quelconque des revendications précédentes, dans lequel l'enceinte (12) se compose d'une partie tubulaire (121), qui présente globalement une forme de révolution cylindrique et/ou conique d'axe de symétrie centrale coïncidant sensiblement avec l'axe (A1) de la buse (111), et d'un collecteur de déchets (122) en liaison avec la partie tubulaire (121) via ladite articulation (123) formée d'au moins une translation et/ou une rotation en fonction du degré de complexité de forme de la surface à usiner.

7. Machine d'usinage (1) par apport d'énergie (112), comportant un système de récupération de déchets (5) apte à mettre en oeuvre le procédé selon l'une quelconque des revendications précédents, la machine comportant une tête d'éjection (11) équipée d'une buse (111) d'axe (A1) sensiblement perpendiculaire à la surface à usiner (4 ; 4a, 4b) et entraînée par un système de guidage (2) deux axes (X,Y), la tête d'éjection (11) se prolongeant par au moins une enceinte (12) jusqu'à la surface à usiner (4; 4a, 4b) et l'enceinte (12) étant couplée à des moyens de pompage d'air (5) pour récupérer les déchets issus de l'usinage, la machine d'usinage (1) est **caractérise en ce que** l'enceinte (12) comporte une partie tubulaire (121) équipée de moyens de variation en longueur (12a, 12b) afin d'adapter l'enceinte (12) à la distance variable entre la tête d'éjection (11) et la surface à usiner (4 ; 4a, 4b), et **en ce que** l'enceinte (12) comporte également un moyen d'articulation (123) en rotation et/ou en translation afin d'adapter l'enceinte (12) aux inclinaisons angulaires variables de la surface à usiner (4 ; 4a, 4b), ainsi que des moyens d'aspiration d'air pour évacuer les déchets par les moyens de pompage d'air.

8. Machine d'usinage selon la revendication précédente, dans laquelle les moyens d'aspiration d'air sont constitués par au moins une paroi annulaire (124) en matériau poreux dans un plan sensiblement perpendiculaire à l'axe (A1) de la buse (111), cette paroi annulaire présente une élasticité suffisante pour servir d'articulation principale ou complémentaire en maintenant l'enceinte en contact avec la surface à usiner de sorte à réaliser un contact étanche permanent de l'enceinte sur cette surface.

9. Machine d'usinage selon l'une quelconque des revendications 7 ou 8, dans laquelle les moyens d'aspiration d'air sont constitués par des moyens d'injection d'air (31) provenant d'un compresseur de sorte que l'air est dirigé (F3, F4) vers des moyens de sortie d'air (32) communiquant avec le tuyau d'aspiration des déchets (5).

10. Machine d'usinage selon l'une quelconque des revendications 7 à 9, dans laquelle l'enceinte comporte un collecteur de déchets monté en liaison avec la partie tubulaire (121) par le moyen d'articulation à double pivotement.

11. Machine d'usinage selon les revendications 9 et 10, dans laquelle les moyens d'injection comportent une fente (31) d'injection d'air comprimé par un compresseur annexe, agencée dans le collecteur (12) de sorte que l'air est dirigé (F3, F4) vers une fente de sortie d'air (32) située en regard de la fente d'injection (31), la fente de sortie (32) communiquant avec le tuyau d'aspiration des déchets (5).

12. Machine d'usinage selon l'une quelconque des revendications 7 à 11, dans laquelle le moyen d'articulation est choisi entre un pivot, une rotule à billes ou à double pivotement, et une rotule couplée à une glissière supplémentaire pouvant se déplacer perpendiculairement à l'axe (A1) de la buse (111).

13. Machine d'usinage selon la revendication précédente, dans laquelle la rotule à double pivotement est un double pivot à deux bagues concentriques (B1, B2) présentant des axes de rotation perpendiculaires (X, Y) définis dans un plan sensiblement perpendiculaire à l'axe (A1) de la buse (111).

14. Machine d'usinage selon l'une quelconque des revendications 7 à 13, dans laquelle les moyens de variation en longueur sont constitués de deux parois (12a, 12b) qui coulissent co-axialement selon l'axe (A1) de la buse (111).

15. Machine d'usinage selon l'une quelconque des revendications 7 à 15, dans lequel les parois coulissantes (12a, 12b) sont liées l'une à l'autre via des roulements à billes (12R) ou à aiguilles.

16. Machine d'usinage selon l'une quelconque des revendications 7 à 15, dans laquelle les moyens de pompage d'air comportent un tuyau d'aspiration (5) couplé à une pompe.

17. Machine d'usinage selon l'une quelconque des revendications 8 à 16, dans laquelle la ou une paroi annulaire (124) est agencée en extrémité de l'enceinte (12), si bien que cette paroi (124) se trouve soit directement en contact avec la surface à usiner (4 ; 4a, 4b) soit en contact avec cette surface (4 ; 4a, 4b) par l'intermédiaire d'une lèvre souple.

18. Machine d'usinage selon l'une quelconque des revendications 8 à 17, dans lequel le matériau poreux est un matériau alvéolaire ouvert, en particulier une mousse de carbone.

## Patentansprüche

1. Verfahren zur Wiedergewinnung von Abfällen, die während einer Bearbeitung einer Fläche (4; 4a, 4b) mit einem Druckmaterialstrahl erzeugt werden, der aus einer Düse (111) mit einer Achse (A1) kommt, die im Wesentlichen senkrecht zu der zu bearbeitenden Fläche (4) ist, wobei die Düse (111) in einem Ausstoßkopf (11) einer Bearbeitungsmaschine (1) eingesetzt wird, der entlang zweier Achsen (X, Y) angetrieben wird, um die Fläche (4; 4a, 4b) von einer Form, die unregelmäßig sein kann, zu bearbeiten, und wobei die Maschine (1) wenigstens eine Kammer (12) aufweist, die den Ausstoßkopf (11) bis zu der zu bearbeitenden Fläche (4; 4a, 4b) verlängert und einen inneren Raum (E) begrenzt, in welchem ein Ansaugen von Luft durch Pumpen durchgeführt wird, um die erzeugten Abfälle abzusaugen, wobei dieses Verfahren **dadurch gekennzeichnet ist, dass** eine Beweglichkeit der Kammer (12) oder einer Anordnung von konzentrischen Kammern dieses Typs von Kammer (12) entlang der Achse (A1) der Düse (111) in Kombination mit einem Dreh- und/oder Translationsgelenk (123) erzielt wird, um eine Anpassung an die Krümmung der bearbeiteten Fläche (4; 4a, 4b) mit einer ausreichenden Elastizität vorzunehmen, um die relativen Verschiebungen des Ausstoßkopfes (11) bezüglich der bearbeiteten Fläche (4; 4a, 4b) auszugleichen und einen im Wesentlichen beständigen dichten Kontakt mit der bearbeiteten Fläche (4; 4a, 4b) aufrechtzuerhalten, um ein Einschließen der Abfälle in dem inneren Raum (E) und ein "Zusammenkehren" der Abfälle während seiner Bewegung zu bewirken, ohne dass die Abfälle aus diesem Raum hinausgelangen können.

2. Verfahren zur Wiedergewinnung nach Anspruch 1, wobei das Ansaugen von Luft von der Außenseite ins Innere (F1, F2) des inneren Raumes (E) durch wenigstens eine poröse Umschließungswand (124) hindurch erfolgt, die eine ausreichende Elastizität aufweist, um das Gelenk zur Anpassung an die Krümmung der bearbeiteten Fläche zu bilden.

3. Verfahren zur Wiedergewinnung nach einem der Ansprüche 1 oder 2, wobei ein Drucklufteinlass (31) in den inneren Raum (E) vorgesehen ist, um die Luft, welche die Abfälle transportiert, zu einem Ausströmauslass (32) zu leiten, der sich gegenüber dem Einlass (31) befindet.

4. Verfahren zur Wiedergewinnung nach einem der vorhergehenden Ansprüche, wobei eine elektromagnetische Membran in dem inneren Raum (E) ausgebildet ist, derart, dass die mit Abfällen beladene Luft den Strahl von abrasivem Material (112) nicht beeinträchtigt.

5. Verfahren zur Wiedergewinnung nach einem der vorhergehenden Ansprüche, wobei die oder eine poröse Umschließungswand (124) am Ende der Kammer (12) angeordnet, so dass sie direkt in elastischen Kontakt mit der bearbeiteten Fläche (4; 4a, 4b) kommt.

6. Verfahren zur Wiedergewinnung nach einem der vorhergehenden Ansprüche, wobei die Kammer (12) aus einem rohrförmigen Teil (121) besteht, welcher im Wesentlichen eine zylindrische und/oder konische Rotationsform mit einer Zentralsymmetrieachse aufweist, die im Wesentlichen mit der Achse (A1) der Düse (111) zusammenfällt, und aus einem Abfallsammler (122), der mit dem rohrförmigen Teil (121) über das Gelenk (123) in Verbindung steht, das in Abhängigkeit vom Grad der Komplexität der Form der zu bearbeitenden Fläche von wenigstens einem Translations- und/oder einem Drehgelenkteil gebildet wird.

7. Bearbeitungsmaschine (1) zur Bearbeitung durch Zufuhr von Energie (112), welche ein System zur Wiedergewinnung von Abfällen (5) aufweist, das geeignet ist, das Verfahren nach einem der vorhergehenden Ansprüche durchzuführen, wobei die Maschine einen Ausstoßkopf (11) aufweist, der mit einer Düse (111) mit einer Achse (A1), die zu der zu bearbeitenden Fläche (4; 4a, 4b) im Wesentlichen senkrecht ist, ausgestattet ist und von einem Führungssystem (2) mit zwei Achsen (X, Y) angetrieben wird, wobei sich der Ausstoßkopf (11) durch wenigstens eine Kammer (12) bis zu der zu bearbeitenden Fläche (4; 4a, 4b) verlängert und die Kammer (12) mit Luftpumpmitteln (5) zum Wiedergewinnen der bei der Bearbeitung angefallenen Abfälle gekoppelt ist, wobei die Bearbeitungsmaschine (1) **dadurch gekennzeichnet ist, dass** die Kammer (12) einen rohrförmigen Teil (121) aufweist, der mit Mitteln zur Längenänderung (12a, 12b) ausgestattet ist, um die Kammer (12) an den variablen Abstand zwischen dem Ausstoßkopf (11) und der zu bearbeitenden Fläche (4; 4a, 4b) anzupassen, und dadurch, dass die Kammer (12) außerdem ein Drehgelenk- und/oder Translationsgelenk-Mittel (123), um die Kammer (12) an die variable Winkel aufweisenden Neigungen der zu bearbeitenden Fläche (4; 4a, 4b) anzupassen, sowie Luftansaugmittel zum Absaugen der Abfälle durch die Luftpumpmittel aufweist.

8. Bearbeitungsmaschine nach dem vorhergehenden Anspruch, wobei die Luftansaugmittel aus wenigstens einer ringförmigen Wand (124) aus porösem Material in einer zu der Achse (A1) der Düse (111) im Wesentlichen senkrechten Ebene bestehen, wobei diese ringförmige Wand eine ausreichende Elastizität aufweist, um als Hauptgelenk oder Hilfsgelenk für das Halten der Kammer in Kontakt mit der zu bearbeitenden Fläche zu dienen, derart, dass ein beständiger dichter Kontakt der Kammer auf dieser Fläche erzielt wird.

9. Bearbeitungsmaschine nach einem der Ansprüche 7 oder 8, wobei die Luftansaugmittel aus Mitteln zur Einspritzung von Luft (31) bestehen, die von einem Verdichter stammt, derart, dass die Luft zu Luftauslassmitteln (32) gelenkt (F3, F4) wird, die mit dem Schlauch zur Absaugung der Abfälle (5) in Verbindung stehen.

10. Bearbeitungsmaschine nach einem der Ansprüche 7 bis 9, wobei die Kammer einen Abfallsammler aufweist, der über das doppelt schwenkbare Gelenkmittel in Verbindung mit dem rohrförmigen Teil (121) angebracht ist.

11. Bearbeitungsmaschine nach den Ansprüchen 9 und 10, wobei die Einspritzmittel einen Schlitz (31) zur Einspritzung von Druckluft durch einen zugehörigen Verdichter aufweisen, der in dem Sammler (12) derart angeordnet ist, dass die Luft zu einem Luftauslassschlitz (32) gelenkt (F3, F4) wird, der sich gegenüber dem Einspritzschlitz (31) befindet, wobei der Auslassschlitz (32) mit dem Schlauch zur Absaugung der Abfälle (5) in Verbindung steht.

12. Bearbeitungsmaschine nach einem der Ansprüche 7 bis 11, wobei das Gelenkmittel aus einem Drehzapfen, einem Kugelgelenk oder doppelt schwenkbarem Gelenk und einem mit einer zusätzlichen Gleitführung gekoppelten Kugelgelenk, das sich senkrecht zur Achse (A1) der Düse (111) bewegen kann, ausgewählt ist.

13. Bearbeitungsmaschine nach dem vorhergehenden Anspruch, wobei das doppelt schwenkbare Gelenk ein doppelter Drehpunkt mit zwei konzentrischen Ringen (B1, B2) ist, die zueinander senkrechte Drehachsen (X, Y) aufweisen, die in einer Ebene definiert sind, die im Wesentlichen senkrecht zur Achse (A1) der Düse (111) ist.

14. Bearbeitungsmaschine nach einem der Ansprüche 7 bis 13, wobei die Mittel zur Längenänderung aus zwei Wänden (12a, 12b) bestehen, welche koaxial entlang der Achse (A1) der Düse (111) gleiten.

15. Bearbeitungsmaschine nach einem der Ansprüche 7 bis 14, wobei die gleitenden Wände (12a, 12b) über Kugellager (12R) oder Nadellager miteinander verbunden sind.

16. Bearbeitungsmaschine nach einem der Ansprüche 7 bis 15, wobei die Luftpumpmittel einen Absaugschlauch (5) aufweisen, der mit einer Pumpe gekoppelt ist.

17. Bearbeitungsmaschine nach einem der Ansprüche 8 bis 16, wobei die oder eine ringförmige Wand (124) am Ende der Kammer (12) angeordnet ist, so dass sich diese Wand (124) entweder direkt in Kontakt mit der zu bearbeitenden Fläche (4; 4a, 4b) oder über eine flexible Lippe in Kontakt mit dieser Fläche (4; 4a, 4b) befindet.

18. Bearbeitungsmaschine nach einem der Ansprüche 8 bis 17, wobei das poröse Material ein offenzelliges Material ist, insbesondere ein Kohlenstoffschaumstoff.

## Claims

1. A method for recovering waste generated during machining of a surface (4; 4a, 4b) using a jet of pressurized material which originates from a nozzle (111) having an axis (A1) which is substantially perpendicular to the surface (4) to be machined, the nozzle (111) being provided in a discharge head (11) of a machining machine (1) which is driven along two axes (X, Y) in order to process the surface (4; 4a, 4b) having a shape which may be difficult, and the machine (1) comprising at least one chamber (12) which extends the discharge head (11) as far as the surface (4; 4a, 4b) to be machined and which delimits an internal space (E) in which a suction of air is carried out by means of pumping in order to discharge the waste generated, this method is **characterized in that** a movability of the chamber (12) or an assembly of concentric chambers is carried out along the axis (A1) of the nozzle (111) in combination with an articulation (123) in order to adapt to the curvature of the machined surface (4; 4a, 4b) with adequate resilience whilst taking up the relative movements of the discharge head (11) relative to the machined surface (4; 4a, 4b) and maintaining a substantially permanent sealed contact with the machined surface (4; 4a, 4b) in order to carry out a confinement of the waste in the internal space (E) and sweeping of the waste during its movement without the waste being able to leave this space.

2. The method for recovering as claimed in claim 1, wherein the suction of air is carried out from the outer side towards the inner side (F1, F2) of the internal space (E) via at least one porous confinement wall (124) which has sufficient resilience to form the articulation for adaptation to the curvature of the machined surface.

3. The method for recovering as claimed in either claim 1 or 2, wherein a pressurized air inlet (31) is provided in the internal space (E) in order to guide the air which carries the waste toward a discharge outlet (32) which is located opposite the inlet (31).

4. The method for recovering as claimed in one of the preceding claims, wherein an electromagnetic membrane is formed in the internal space (E) so that the air which is charged with waste does not disrupt the jet of abrasive material (112).

5. The method for recovering as claimed in one of the preceding claims, wherein the or a porous confinement wall (124) is arranged at the end of the chamber (12) in order to move directly into resilient contact with the machined surface (4; 4a, 4b).

6. The method for recovering as claimed in one of the preceding claims, wherein the chamber (12) is composed of a tubular portion (121), which is generally of cylindrical shape formed by means of revolution and/or conical with a central axis of symmetry which substantially coincides with the axis (A1) of the nozzle (111), and a waste collector (122) which is connected to the tubular portion (121) via the articulation (123) which is formed by at least one translation and/or a rotation in accordance with the degree of complexity of the shape of the surface to be machined.

7. A machining machine (1) using energy input (112), comprising a waste recovery system (5) which is capable of implementing the method as claimed in one of the preceding claims, the machine comprising a discharge head (11) which is provided with a nozzle (111) having an axis (A1) which is substantially perpendicular to the surface (4; 4a, 4b) to be machined and which is driven by a guiding system (2) having two axes (X,Y), the discharge head (11) being extended by at least one chamber (12) as far as the surface (4; 4a, 4b) to be machined and the chamber (12) being connected to air pumping means (5) in order to recover the waste originating from the machining operation, the machining machine (1) is **characterized in that** the chamber (12) comprises a tubular portion (121) which is provided with length variation means (12a, 12b) in order to adapt the chamber (12) to the variable distance between the discharge head (11) and the surface to be machined (4; 4a, 4b), and **in that** the chamber (12) also comprises a means (123) for articulation in terms of rotation and/or translation in order to adapt the chamber (12) to the variable angular inclinations of the surface (4; 4a, 4b) to be machined and air suction means in order to discharge the waste via the air pumping means.

8. The machining machine as claimed in the preceding claim, wherein the air suction means are constituted by at least one annular wall (124) of porous material in a plane substantially perpendicular to the axis (A1) of the nozzle (111), this annular wall has sufficient resilience to act as a main or complementary articulation while maintaining the chamber in contact with the surface to be machined in order to produce a permanent sealed contact of the chamber on this surface.

9. The machining machine as claimed in either claim 7 or claim 8, wherein the air suction means are constituted by means (31) for injection of air which originates from a compressor so that the air is directed (F3, F4) towards air outlet means (32) which communicate with the waste suction pipe (5).

10. The machining machine as claimed in one of claims 7 to 9, wherein the chamber comprises a waste collector which is mounted so as to be connected to the tubular portion (121) via the dual-pivot articulation means.

11. The machining machine as claimed in claims 9 and 10, wherein the injection means comprise an aperture (31) for injection of air compressed by a connected compressor, which is arranged in the collector (12) so that the air is directed (F3, F4) towards an air outlet aperture (32) which is located opposite the injection aperture (31), the outlet aperture (32) communicating with the waste suction pipe (5).

12. The machining machine as claimed in one of claims 7 to 11, wherein the articulation means is selected from a pivot, a ball-bearing or dual-pivot ball and socket joint, and a ball and socket joint which is connected to an additional sliding member which can move perpendicularly to the axis (A1) of the nozzle (111).

13. The machining machine as claimed in the preceding claim, wherein the dual-pivot ball and socket joint is a dual-pivot having two concentric rings (B1, B2) which have perpendicular rotation axes (X, Y) which are defined in a plane which is substantially perpendicular to the axis (A1) of the nozzle (111).

14. The machining machine as claimed in one of claims 7 to 13, wherein the length variation means are constituted by two walls (12a, 12b) which slide coaxially along the axis (A1) of the nozzle (111).

15. The machining machine as claimed in one of claims 7 to 14, wherein the sliding walls (12a, 12b) are connected to each other via ball or needle type bearings (12R).

16. The machining machine as claimed in one of claims 7 to 15, wherein the air pumping means comprise a suction pipe (5) which is connected to a pump.

17. The machining machine as claimed in one of claims 8 to 16, wherein the or an annular wall (124) is arranged at the end of the chamber (12) so that this wall (124) is located either directly in contact with the surface (4; 4a, 4b) to be machined or in contact with this surface (4; 4a, 4b) via a flexible lip.

18. The machining machine as claimed in one of claims 8 to 17, wherein the porous material is an open cellular material, in particular a carbon foam.
